# DEMANDE DE BREVET EUROPEEN

(11) **EP 3 943 531 A1**
(43) Date de publication de la demande: **26.01.2022**
(21) Numéro de dépôt: 20187226.4
(22) Date de dépôt: 22.07.2020
(51) Int. Cl.: C08J 3/22, C08K 5/00, C08K 9/10, C08K 3/013, C09K 11/00

(54) **MELANGE-MAITRE ELASTOMERE PHOSPHORESCENT ET COMPOSANT HORLOGER COMPRENANT UN TEL MELANGE**

(71) Demandeur: The Swatch Group Research and Development Ltd, 2074 Marin (CH)
(72) Inventeur: NAPOLI, Sophie, 2000 Neuchâtel (CH); FRANÇOIS, Nicolas, 2000 Neuchâtel (CH)
(74) Mandataire: ICB SA

(57) **Abrégé**

La présente invention concerne un mélange-maître comprenant :
- de 40 à 95% en poids d'un pigment photoluminescent ledit pigment présentant une taille de particule limitée par tamisage à 30µm ;
- 5 à 60% en poids d'un polymère sous forme d'un élastomère ou d'un précurseur d'élastomère choisi parmi les polymères fluorés de la famille des FKM, la famille des polyuréthanes (TPU), les copolymères d'Ethylène vinyl acétate (EVA), les silicones, les caoutchoucs d'éthylène propylène (EPR) et leur dérivés thermoplastiques (TPO) et les élastomères acryliques.

## Description

### Domaine technique

L'invention est relative à un mélange-maître pour composition élastomérique phosphorescente et un composant horloger ou de joaillerie comprenant un composant dans un tel mélange-maître.

### Arrière-plan technologique

Les matières élastomères photoluminescentes sont assez répandues sur le marché et ce pour des applications variées, telles que des pneus, des accessoires de signalisation, etc. (Par exemple : US6431236B1, JPH10121424A).

Le mode de réalisation connu de ces matières élastomères photoluminescentes est défini par le mélange direct d'un élastomère et du pigment photoluminescent à un taux massique de 30% maximum (Par exemple : JP4030196B2, JP2000044733A).

Les sociétés d'horlogerie proposent déjà des bracelets phosphorescents à base de silicone, mais la société Bell&Ross a récemment développé l'offre en proposant, en édition limitée, une montre dotée d'un bracelet caoutchouc phosphorescent. Pour son bracelet en caoutchouc synthétique luminescent, Bell&Ross ajoute des pigments directement dans la matière, qui est ensuite moulée à chaud et pressée. Afin de limiter l'usure de l'outil de mélange, le taux de charge a été limité à 20% : les performances s'en ressentent et ne sont pas satisfaisantes pour ce type d'applications.

Ces modes de réalisation et les mélanges qui en sont les résultats ont les désavantages suivants :
- une usure prématurée de l'outil de mélange,
- une pollution du mélange par des particules métalliques provenant de l'usure de l'outil de mélange,
- des performances lumineuses limitées.

### Résumé de l'invention

L'invention vise à fournir une composition phosphorescente qui ne souffre pas des inconvénients décrits ci-dessus.

La présente invention concerne un mélange-maître comprenant :
- de 40 à 95% en poids d'un pigment photoluminescent ledit pigment présentant une taille de particule limitée par tamisage à 30µm ;
- 5 à 60% en poids d'un polymère sous forme d'un élastomère ou d'un précurseur d'élastomère choisi parmi les polymères fluorés de la famille des FKM (abréviation en anglais pour « fluoroelastomer materials »), la famille des polyuréthanes (TPU), les copolymères d'Ethylène vinyl acétate (EVA), les silicones, les caoutchoucs d'éthylène propylène (EPR) et leurs dérivés thermoplastiques (TPO) et les élastomères acryliques, de préférence.

Avantageusement, le mélange-maître de l'invention comprend 0,2 à 2% en poids par rapport au polymère de cire naturelle (p. ex. cire de carnauba) ou minérale (paraffines, vaseline) et/ou d'huile (mélanges d'alcool gras, acides gras ou esters d'acides gras tels que des triglycérides).

De préférence, le mélange-maître comprend 0,1 à 2% de chromophores et/ou de fluorochromes.

De préférence, dans le mélange-maître le polymère est un FKM.

Avantageusement, le mélange-maître ne comprend pas d'agent de réticulation, celui-ci, lorsqu'il est nécessaire étant ajouté séparément dans le mélange final.

Un second aspect de l'invention concerne une composition comprenant 50 à 80% (de préférence plus de 60%) en poids du mélange-maître selon l'invention.

L'invention concerne aussi un composant horloger tel qu'un bracelet de montre, ou un boîtier de montre comprenant une composition selon l'invention.

Enfin, l'invention concerne un procédé de fabrication d'un composant horloger photoluminescent comprenant les étapes de :
a. produire un mélange-maître selon l'une des revendications 1 à 5;
b. mélanger le mélange-maître dans un polymère compatible avec ledit mélange-maître pour obtenir un mélange selon l'une des revendications 6 à 9 ;
c. mettre en forme la composition obtenue en b) pour obtenir un composant horloger photoluminescent.

### Description détaillée

Un premier aspect de l'invention concerne une composition polymérique concentrée (mélange-maître) comprenant un pigment phosphorescent (ARALON^{®}, Radiant Color, etc.) ladite composition étant adéquate pour un usage dans un caoutchouc de préférence du type fluoroélastomère.

L'utilisation d'un tel mélange-maître permet de palier aux désavantages précités.

Selon le premier aspect de l'invention, le pigment phosphorescent, sous forme de poudre, est tamisé de façon à ne conserver que la fraction d'une taille inférieure à 30µm (taille déterminée par le tamisage lui-même). Il a en effet été découvert que sous cette taille, l'abrasion des outils de mise en œuvre des polymères était réduite. Les particules phosphorescentes de taille supérieure peuvent soit être utilisées pour d'autres applications, soit être broyées pour parvenir à une taille inférieure à 30µm.

Ensuite, le pigment est encapsulé dans un polymère, sous forme d'une composition concentrée ou mélange-maître. Cette encapsulation permet de réduire le contact direct avec l'outil de mélange final du mélange polymérique en vue de former de l'objet visé.

La réalisation d'un mélange-maître est une première voie permettant l'encapsulation du pigment dans une matrice dont les propriétés n'interagissent pas avec les domaines d'absorption et d'émission du pigment photoluminescent.

Ce mélange-maître comprend un élastomère ou un précurseur d'élastomère transparent optiquement dans le domaine 360nm à 650nm et compatible chimiquement avec l'élastomère souhaité dans le mélange (teneur en élastomère : de 2% à 10% en poids, de préférence de 4 à 8%).

Par précurseur d'élastomère, nous entendons dans la présente description un polymère de faible masse moléculaire souvent liquide à température ambiante, ou pouvant aisément être rendu liquide par dissolution dans un solvant et destiné à être ultérieurement réticulé avec l'élastomère du mélange final.

L'élastomère ou son précurseur est de préférence choisi parmi les élastomères fluorés tels que ceux de la famille des FKM (fluoro ou perfluoropolyalkylène réticulable) ou les élastomères thermoplastiques tels que les TPU (Polyuréthanes), les EVA (Ethylène vinyl acétate copolymère), les silicones, les EPR (caoutchouc d'éthylène propylène) et leurs dérivés thermoplastiques (TPO) ou encore de la famille des élastomères acryliques.

Dans le cas de l'utilisation d'un précurseur d'élastomère, le système de réticulation (typiquement, un initiateur, par exemple un peroxyde organique, accompagné d'un co-agent de réticulation) peut soit être intégré au mélange-maître, soit ultérieurement dans le mélange final.

Cette dernière solution, présentant l'avantage d'un mélange-maître stable dans le temps est préférée. En particulier, le mélange-maître peut alors être effectué en présence d'un solvant permettant une forte réduction de la viscosité. Cette réduction de viscosité permet alors l'utilisation de mélangeur rapide tel qu'un Turrax^{®}. L'absence du système de réticulation dans le mélange-maître permet alors d'éliminer le solvant par évaporation à chaud sans que la réticulation ne démarre à un moment inopportun.

Dans le cas d'un thermoplastique, le mélange-maître est préparé dans une installation de mélange classique de type extrusion bi-vis, co-rotative ou contrarotative. Dans ce cas, la qualité de la dispersion dans le mélange-maître peut être améliorée par l'utilisation de polymère de viscosité réduite par rapport au mélange final. Cette réduction de viscosité peut aussi être obtenue ou améliorée par l'utilisation de cires.

L'homme de métier comprendra aisément que, de manière générale, la matrice utilisée dans le mélange-maître est de préférence compatible avec la matrice dans laquelle le mélange-maître doit être dispersé. Idéalement, la matrice du mélange-maître est de même nature que la matrice de la composition finale.

Avantageusement, le mélange-maître contient également des huiles ou des cires à un taux massique de 0,2 à 2%, de préférence de 0.4 à 1.8% en poids par rapport au polymère. Ces cires et huiles, en réduisant la viscosité permettent une plus grande incorporation de pigments photoluminescents. Ces cires et huiles sont sélectionnées parmi des cires et des huiles optiquement transparentes dans le domaine 360nm à 650nm.

Le mélange-maître peut ainsi contenir jusqu'à 95% (en masse) de pigments photoluminescents, ce qui garantit des performances luminescentes élevées.

Le mélange-maître peut avantageusement contenir des fluorochromes ou des chromophores (des azurants optiques, des pigments ou colorants, etc.) permettant de doper les propriétés luminescentes ou de provoquer une cascade photochimique afin d'obtenir des émissions luminescentes colorées différentes de celle du pigment photoluminescent choisi initialement.

Le mélange-maître ainsi formé est ensuite dispersé dans la composition finale selon des conditions de mélange plus douces (échauffement et taux de cisaillement limité) : dans le cas de systèmes réticulés, le mélange final est alors effectué typiquement dans un mélangeur ouvert tel qu'une calandreuse, ou, dans le cas de thermoplastiques dans une extrudeuse mono-vis comprenant des sections de mélange et/ou un ou des mélangeurs statiques.

Afin d'incorporer une grande quantité de pigment dans le mélange final, le mélange-maître, après évaporation de l'éventuel solvant est mélangé de 50 à 80% en poids dans le mélange final.

Le mélange obtenu est alors mis moulé ou extrudé dans sa forme définitive, par exemple d'un bracelet de montre.

### Exemple de préparation mélange photoluminescent

Le mélange-maître suivant est réalisé :
Le grade FKM Tecnoflon^{®} P-457 pur de Solvay qui est fabriqué sur une ligne propre et qui est transparent est utilisé comme matrice du mélange-maître.

Le Tecnoflon^{®} P-457 est dilué dans un ratio 1 :1 dans du Méthyl Ether Ketone (MEK) ou dans de l'Acétate d'Ethyle.

Le pigment photoluminescent préalablement tamisé à 30µm est incorporé dans le mélange obtenu à l'étape précédente, la quantité de pigment étant dans un ratio 1 :1 par rapport au Tecnoflon^{®} P-457 et l'ensemble est mélangé sur un mélangeur haute vitesse à 3000 tr.mn-1.

Un fluorochrome est introduit à hauteur de 0.5% par rapport au total (soit 1,5% par rapport au polymère FKM) et l'ensemble est de nouveau mélangé sur mélangeur à haute vitesse, par exemple à 3000 tr.mn-1.

Le solvant est évaporé en étuve aux environs de 80°C jusqu'à élimination du solvant.

Le mélange-maître préalablement réalisé est incorporé à hauteur de 60% minimum dans un FKM P-457 pur par travail sur mélangeur ouvert.

En fin de mélange un système de vulcanisation est ajouté (2.5% en poids de Luperox^{®} 101XL-45 + 3% en poids de Drimix^{®} TAIC 75%, les pourcentages étant exprimés par rapport au polymère).

Préférablement, de l'huile Nafol 1822B^{™} commercialisée par Sasol (jusqu'à 1.8%) est aussi ajoutée. L'ensemble constitue le mélange FKM photoluminescent optimisé, prêt à être mis en forme et réticulé.

Le mélange obtenu est ensuite moulé par compression et réticulé dans sa forme finale. Le composant ainsi obtenu présente une concentration en pigments de 30%, et les pigments sont distribués de façon homogène, sans agglomération de particules, ce qui permet des propriétés optiques de photoluminescence optimales.

## Revendications

1. Mélange-maître comprenant :
- de 40 à 95% en poids d'un pigment photoluminescent ledit pigment présentant une taille de particule limitée par tamisage à 30µm ;
- 5 à 60% en poids d'un polymère sous forme d'un élastomère ou d'un précurseur d'élastomère choisi parmi les polymères fluorés de la famille des FKM, la famille des polyuréthanes (TPU), les copolymères d'Ethylène vinyl acétate (EVA), les silicones, les caoutchoucs d'éthylène propylène (EPR) et leur dérivés thermoplastiques (TPO) et les élastomères acryliques.

2. Mélange-maître selon la revendication 1 comprenant 0,2 à 2% de cire et/ou d'huile.

3. Mélange-maître selon l'une des revendications précédentes comprenant 0,1 à 2% de chromophores et/ou de fluorochromes.

4. Mélange-maître selon l'une des revendications précédentes dans lequel le polymère est un FKM.

5. Mélange-maître selon l'une des revendications précédentes ne comprenant pas d'agent de réticulation.

6. Composition polymérique comprenant 50 à 80% en poids du mélange-maître selon l'une des revendications précédentes.

7. Composition polymérique selon la revendication 6 comprenant au moins 60% de mélange-maître.

8. Composition selon l'une des revendications 6 ou 7 comprenant un système de réticulation comprenant un peroxyde organique et un co-agent de réticulation.

9. Composant horloger ou joaillier comprenant une composition selon l'une des revendications 6 à 8.

10. Procédé de fabrication d'un composant horloger photoluminescent comprenant les étapes de :
a. produire un mélange-maître selon l'une des revendications 1 à 5;
b. mélanger le mélange-maître dans un polymère compatible avec ledit mélange-maître pour obtenir un mélange selon l'une des revendications 6 à 9 ;
c. mettre en forme la composition obtenue en b) pour obtenir un composant horloger photoluminescent.
